# EUROPEAN PATENT SPECIFICATION

(11) **EP 2 168 193 B1**
(45) Date of publication and mention of the grant of the patent: **18.07.2012**
(21) Application number: 08758811.7
(22) Date of filing: 28.05.2008
(51) Int. Cl.: H01M 8/04

(54) **ANODE RECYCLE UNIT WITH PUMP AND SEPARATOR, AND A FUEL CELL SYSTEM**
ANODENRECYCLEEINHEIT MIT PUMPE UND TRENNGLIED UND BRENNSTOFFZELLENSYSTEM
UNITÉ DE RECYCLAGE D'ANODE AVEC POMPE ET SÉPARATEUR, ET SYSTÈME DE PILE À COMBUSTIBLE

(30) Priority: 17.07.2007 DE 102007033203
(43) Date of publication of application: 31.03.2010
(73) Proprietor: Daimler AG, 70327 Stuttgart (DE)
(72) Inventor: KNOOP, Andreas, 73728 Esslingen (DE); MIRSCH, Dietmar, 73230 Kirchheim (DE); SCHABEL, Hans-Jörg, 72644 Oberboihingen (DE)
(74) Representative: JENSEN & SON
(86) International application number: PCT/EP2008/004226
(87) International publication number: WO 2009/010122

(56) References cited:
- WO-A-2005/104282
- WO-A-2006/056276
- WO-A-2006/061194
- US-A- 3 104 964
- US-A1- 2004 219 401

## Description

The invention relates to a recirculation unit for an anode circuit of a fuel cell system having at least one moving element by means of which a two-phase flow with a liquid phase can be conveyed, and to a fuel cell system having a recirculation unit such as this.

A fuel cell system comprises one or more fuel cells which are connected in series and/or in parallel to form a fuel cell stack. Hydrogen is normally used as the fuel, also referred to as the anode gas. However, it is also known for methane, methanol or glucose solution to be used. The fuel, in particular hydrogen, is fed into the fuel cell stack at an inlet on an anode side of the fuel cell or of the fuel cell stack. Anode off-gases emerge at an outlet from the fuel cell or the fuel cell stack and, when using hydrogen, comprise, inter alia, unconsumed hydrogen as well as water. The unconsumed fuel can be made available again at the inlet via a recirculation circuit. The recirculation circuit for this purpose has a recirculation unit, for example a pump.

If there is water in the anode off-gas, then there is a risk at temperatures below the freezing point of water, that is to say at temperatures below 0°C, of the recirculation unit freezing up. Particularly in the case of so-called frozen starting, that is to say starting without preheating, this can then lead to damage of the recirculation unit.

It is therefore known, for example from US 2004/0219401 A1, for the recirculation unit to be purged with a dry purging gas during the process of shutting down the fuel cell system in order to remove any amount of water that is present there. For this purpose, a connecting line is provided between an air compressor, which produces compressed air on a cathode side of the fuel cell stack, and a purging gas inlet on the unit.

A separator used in the recirculation line of anode circuit of fuel cell system is also known from WO 2006/061194 A1. In WO 2005/104282 A1 a electronically controlled exhaust valve for a gas/Liquid separator is disclosed. Furthermore WO 2006/056276 A1 describes the use of more than one separator in the anode circuit of a fuel cell system.

US 3,104,964 A describe a gas pump for a recirculation device in a fuel cell system, which has liquid removal means. The liquid removal means comprises a collector groove to collect the liquid forced by centrifugal action to enter the groove. From the groove the liquid is removed by e.g. a pilot tube.

One object of the present invention is to provide a recirculation unit in which the risk of the unit freezing up is prevented, or is at least reduced. A further object of the invention is to provide a fuel cell system having a corresponding unit.

This object is achieved by a recirculation unit for an anode circuit of a fuel cell system having at least one moving element by means of which a two-phase flow can be conveyed, with at least one separator being arranged in the unit.

Integration of the separator in the unit allows a particularly compact design. In this case, depending on the field of application of the unit, the weight can be reduced by about 2 kg and the volume can be reduced by about 11% of the associated system. This compact design is therefore particularly advantageous for mobile systems, for example in motor vehicles. The unit is a pump, a compressor, a turbine, a fan or the like. The separator is designed such that it is possible to avoid at least relatively large amounts of condensate, in particular relatively large water droplets, which can cause moving parts of the unit to freeze up. In this case, there is no need for additional valves and/or sensors.

The separator can be designed using the geometry of the unit and/or steady-state and/or dynamic flow trajectories of a liquid phase of the two-phase flow. This allows an optimum geometry and an optimum arrangement of the separator on the unit, for deposition of relatively large amounts of condensate or water.

The recirculation unit is a side-channel compressor and/or fan. According to the invention, a channel is formed as a separator in the radial direction in the interruption in the side channel. During operation, a condensate, in particular water, which is contained in a two-phase flow conveyed by the side-channel compressor or fan, is deposited in the channel formed as the separator.

In a further embodiment of the unit, the separator has an outlet with an outlet valve. The outlet is in this case likewise provided in and/or adjacent to the unit, thus forming a compact design.

In one development of the invention, the outlet valve can be provided with closed-loop and/or open-loop control, in particular electronic closed-loop and/or open-loop control. An outlet valve which can be provided with closed-loop and/or open-loop control makes it possible to output the deposited condensate as required, for example when a certain amount of water is exceeded.

In a further refinement of the invention, the separator has an associated sensor for detection of a liquid content or filling level. By way of example, the sensor may be a so-called level sensor for the detection of a filling level. In other refinements, it is possible to dispense with a sensor, depending on the operating procedure. However, a corresponding sensor allows the outlet valve in the outlet to be controlled particularly reliably.

The object is also achieved by a fuel cell system comprising a unit according to the invention. The unit is preferably integrated in an anode circuit of the fuel cell system. However, other applications are also feasible.

In one development of the fuel cell system, a second separator is provided in the anode circuit, in which case a condensate which is deposited on the first separator can be output via an outlet from the second separator. The second separator may be a conventional separator upstream of the unit. Combination with a unit according to the invention makes it possible to make the separator smaller, in order in this way to save physical space. The condensate which emerges from the integrated separator can in this case be introduced into the second separator, and output via its outlet, using the pressure difference in the system.

In one development of the fuel cell system, a third separator is provided, with the third separator having an inlet for a purging gas, and with an outlet of the third separator being connected to the inlet of the unit. By way of example, the third separator may be arranged and/or operated as described in US 2004/0219401 A1.

Further advantages of the invention will become evident from the following description of one exemplary embodiment of the invention, which is illustrated schematically in the drawings. The same reference symbols are used for the same or similar components in the drawings. All of the features and/or advantages which are evident from the claims, the description or the drawings, including design details, physical arrangements and method steps, may be significant to the invention both in their own right and in widely differing combinations. In the figures:
Figure 1 shows a block diagram of a fuel cell system according to the invention;
Figure 2 shows a part of one exemplary embodiment of a unit according to the invention, in the form of a partially cut-open perspective side view, and
Figure 3 shows a perspective plan view of the component shown in Figure 2.

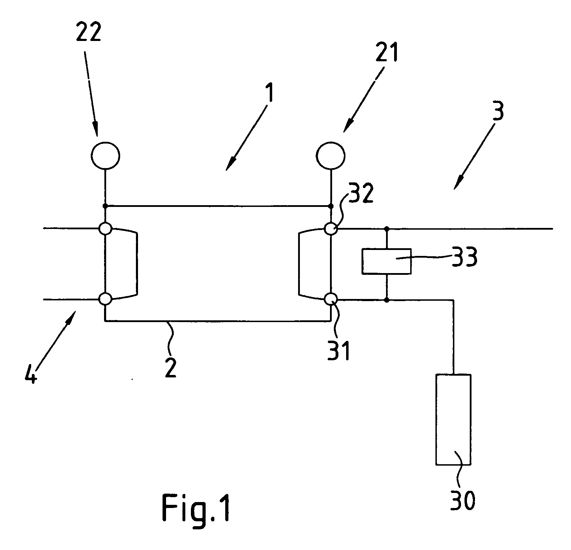

Figure 1 shows, schematically, a block diagram of one exemplary embodiment of a fuel cell system 1 according to the invention. The fuel cell system 1 has a fuel cell stack 2 which is formed from a plurality of fuel cells which are electrically connected in series and/or in parallel. Anode sides of individual fuel cells in the fuel cell stack 2 provide the anode side 21 of the fuel cell stack 2. The cathode sides of the fuel cells likewise provide the cathode side 22 of the fuel cell stack. Anode and cathode circuits 3, 4, which are illustrated in a simplified form, are arranged respectively on the anode side 21 and on the cathode side 22. The anode circuit 3, which is illustrated in a simplified form, has a fuel reservoir 30, with the fuel, for example hydrogen, being supplied to the fuel cell stack 2 via an inlet 31. Anode off-gas is output via an outlet 32 from the fuel cell stack 2. According to the invention, a recirculation unit 33 is provided, through which at least some of the anode off-gas can be fed back to the inlet 31 again.

According to the invention, a separator which is not illustrated in Figure 1 is integrated in the recirculation unit 33, so that a condensate, in particular water, can be deposited in the recirculation unit 33. Relatively large water droplets which can cause a moving part of the recirculation unit, for example an impeller of a recirculation fan, to freeze up are thus avoided.

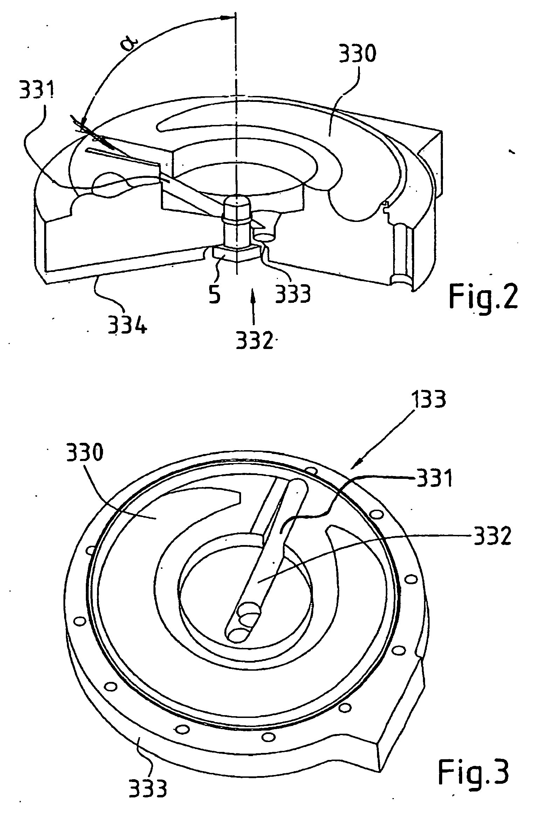

Figures 2 and 3 show, schematically, a housing cover 133 for a recirculation unit 33 according to the invention which, in the illustrated exemplary embodiment, is in the form of a side-channel fan or side-channel compressor, illustrated in the form of a partially cut-open perspective side view (Figure 2) and a perspective plan view (Figure 3). A side channel 330 is formed in the housing cover 133. The side-channel compressor sucks in a fluid, that is to say a gas, a liquid or a two-phase flow, with the pressure of the fluid being increased by a series of vortices which are produced by centrifugal force in the side channel 330. As can be seen in Figure 3, the side channel 330 is not circumferential, but is interrupted. According to the invention, a channel 331 is formed as a separator in the radial direction in the interruption in the side channel 330. The channel 331 is inclined at an angle of between 0° and 90° with respect to a rotation axis A or axial direction of the side-channel compressor. During operation, a condensate, in particular water, which is contained in a two-phase flow conveyed by the side-channel compressor, is deposited with a specific deposition degree, depending on the operating point. The deposited condensate is collected in an area of a centre 332 of the housing cover 133, and is output via an outlet in the form of an opening 333. The opening 333 can open into a line, which is not illustrated, for this purpose. The opening 333 and/or the line may also have an outlet valve (not illustrated), with the outlet valve being opened in order to output the condensate when a definable amount of deposited condensate is exceeded. Furthermore, a sensor 5 for detection of a liquid content is provided in the centre 332 of the housing cover 133. The sensor 5 in the illustrated exemplary embodiment is in the form of a level sensor for detection of a filling level. In the illustrated housing cover 133, a groove 334 is provided, in which a cable, which is not illustrated, for controlling and/or reading the sensor 5 can be routed.

A separator in this form replaces a separate separator, which is provided upstream of the unit 33 in the fuel cell system 1 as shown in Figure 1. This makes it possible to considerably reduce the total weight of the fuel cell system 1 and the total volume of the fuel cell system 1. However, in other embodiments, a separator can also be provided upstream of the unit 33 shown in Figure 1, although this may be smaller than that in conventional systems.

## Claims

1. Recirculation unit (33, 133) for an anode circuit (3) of a fuel cell system (1) having at least one moving element by means of which a two-phase flow with a liquid phase can be conveyed, wherein at least one separator (331) is arranged in the recirculation unit (33, 133),
**characterized in that** the recirculation unit is a side-channel compressor (133) or side-channel fan and the side-channel (330) is interrupted
in radial direction by a channel (331) formed as the separator.

2. Recirculation unit (33,133) according to claim 1, **characterized in that** the separator (331) is formed in the housing cover (133) of the recirculation unit (33, 133).

3. Recirculation unit (33,133) according to one of claims 1 to 2, **characterized in that** the separator (331) has an outlet (333) with an outlet valve.

4. Recirculation unit (33,133) according to claim 3, **characterized in that** the outlet valve is electronically controllable.

5. Recirculation unit (33,133) according to one of claims 1 to 4, **characterized in that** the separator (331) has an associated sensor (5) for detection of a liquid content.

6. Fuel cell system comprising a recirculation unit (33, 133) according to one of Claims 1 to 8.

7. Fuel cell system according to claim 6, **characterized in that** a second separator is provided in the anode circuit (3), in which case a condensate which is deposited on the first separator can be output via an outlet from the second separator.

8. Fuel cell system according to claim 6 or 7, **characterized in that** a third separator is provided, with the third separator having an inlet for a purging gas, and with an outlet of the third separator being connected to the inlet of the unit (33).

## Patentansprüche

1. Umwälzeinheit (33, 133) für einen Anodenkreis (3) eines Brennstoffzellensystems (1), mit mindestens einem bewegten Element, mittels dessen ein Zweiphasenstrom mit einer Flüssigkeitsphase gefördert werden kann, wobei in der Umwälzeinheit (33, 133) mindestens ein Trennglied (331) angeordnet ist, **dadurch gekennzeichnet, dass** die Umwälzeinheit ein Seitenkanalverdichter (133) oder ein Seitankanalgebläse is und der Seitenkanal (330) in radialer Richtung von einem Kanal (331) unterbrochen wird, der als das Trennglied ausgebildet ist.

2. Umwälzeinheit (33, 133) nach Anspruch 1, **dadurch gekennzeichnet, dass** das Trennglied (331) im Gehäusedeckel (133) der Umwälzeinheit (33, 133) ausgebildet ist.

3. Umwälzeinheit (33, 133) nach Anspruch 1 oder 2, **dadurch gekennzeichnet, dass** das Trennglied (331) einen Auslass (333) mit einem Auslassventil aufweist.

4. Umwälzeinheit (33, 133) nach Anspruch 3, **dadurch gekennzeichnet, dass** das Auslassventil elektronisch steuerbar ist.

5. Umwälzeinheit (33, 133) nach einem der Ansprüche 1 bis 4, **dadurch gekennzeichnet, dass** das Trennglied (331) einen zugehörigen Sensor (5) zur Ermittlung eines Flüssigkeitsgehalts aufweist.

6. Brennstoffzellensystem, umfassend eine Umwälzeinheit (33, 133) nach einem der Ansprüche 1 bis 8.

7. Brennstoffzellensystem nach Anspruch 6, **dadurch gekennzeichnet, dass** im Anodenkreis (3) ein zweites Trennglied vorgesehen ist, in welchem Fall ein auf dem ersten Trennglied abgelagertes Kondensat über einen Auslass vom zweiten Trennglied abgehen kann.

8. Brennstoffzellensystem nach Anspruch 6 oder 7, **dadurch gekennzeichnet, dass** ein drittes Trennglied vorgesehen ist, wobei das dritte Trennglied einen Einlass für Spülgas aufweist und ein Auslass des dritten Trenngliedes an den Einlass der Einheit (33) angeschlossen ist.

## Revendications

1. Unité de recirculation (33, 133) pour un circuit d'anode (3) d'un système de pile à combustible (1) muni d'au moins un élément mobile au moyen duquel un écoulement à deux phases dont une phase liquide peut être transportée, dans lequel au moins un séparateur (331) est monté dans l'unité de recirculation (33, 133), **caractérisée en ce que** l'unité de recirculation est un compresseur (133) à canal latéral ou un ventilateur à canal latéral et le canal latéral (330) est interrompu dans la direction radiale par un canal (331) formé comme le séparateur.

2. Unité de recirculation (33, 133) selon la revendication 1, **caractérisée en ce que** le séparateur (331) est formé dans le couvercle du carter (133) de l'unité de recirculation (33, 133).

3. Unité de recirculation (33, 333) selon la revendication 1 ou la revendication 2, **caractérisée en ce que** le séparateur (331) possède une sortie (333) avec une soupape de refoulement.

4. Unité de recirculation (33, 133) selon la revendication 3, **caractérisée en ce que** la soupape de refoulement est à commande électronique.

5. Unité de recirculation (33, 5) selon l'une quelconque des revendications 1 à 4, **caractérisée en ce que** le séparateur (331) possède un capteur (5) associé servant à détecter un contenu liquide.

6. Système de pile à combustible comprenant une unité de recirculation (33, 133) selon l'une quelconque des revendications 1 à 8.

7. Système de pile à combustible selon la revendication 6, **caractérisé en ce qu'**un second séparateur est prévu dans le circuit d'anode (3) au cas où un condensat, qui se dépose dans le premier séparateur, peut être évacué par une sortie du second séparateur.

8. Système de pile à combustible selon la revendication 1 ou la revendication 6, **caractérisé en ce qu'**un troisième séparateur ayant une entrée pour un gaz de purge, et une sortie du troisième séparateur étant raccordée à l'entrée de l'unité (33).
